# EUROPEAN PATENT APPLICATION

(11) **EP 4 821 650 A1**
(43) Date of publication of application: **14.10.2026**
(21) Application number: 25190760.6
(22) Date of filing: 21.07.2025
(51) Int. Cl.: B28D 1/22, B23Q 9/00, B28D 7/00, C03B 33/12

(54) **A RAIL FOR PLATE CUTTING MACHINE COMPOSED OF MULTI-SEGMENT SHORT RAILS AND SUCTION CUPS**

(30) Priority: 08.04.2025 CN 202510435186
(71) Applicant: Hangzhou Jonn Hardware Tools Co., LTD., Hangzhou Zhejiang (CN)
(72) Inventor: JIANG, Daojian, 311121 Hangzhou, Zhejiang (CN)
(74) Representative: Margue, Robert Germain

(57) **Abstract**

The present invention relates to a rail for a plate cutting machine composed of multi-segment short rails and suction cups. The rail comprises longitudinal guide rails and suction cups, wherein: Said longitudinal guide rails are formed by longitudinal end-to-end splicing of multiple short rail bodies (1) of identical or differing lengths with suction cups (6); Said short rail bodies (1) are **laterally oppositely spliced; Smooth shafts** (1-1) are embedded in opposing upper and lower surfaces of **through grooves** on both sides of each short rail body, collectively constituting longitudinal **clamp-type U-groove bearing sliding tracks. Advantages:** Compared with the prior art, the present invention achieves: **First, Single-pass scoring/cutting** of plates of **arbitrary length** while ensuring **cut surface uniformity; Second, Clamp-type engagement** between upper/lower rail surfaces and **U-groove bearing contact surfaces** of the cutting device; Third, Elimination of **line discontinuity** and **non-uniform cutting,** preventing **irregular fracture surfaces, glaze chipping,** or cracking during plate separation after scoring.

## Description

### Technical Field:

The present invention relates to a rail for a plate cutting machine composed of multi-segment short rails and suction cups, which **simultaneously satisfies** the requirements for **single-pass scoring/cutting** of plates with **varying specifications (lengths)** and **ensures precision quality** of the scored/cut lines. It belongs to the field of **plate cutting machine manufacturing technology.**

### Background Art

EP 3415473 B1**,** entitled **"Plate Cutting System",** discloses a cutting system comprising:
a scoring slider, and a longitudinal guide member including a pair of opposing surfaces. The lower surface of said pair is adapted to face a plate blank being processed, while the upper surface is equipped with a **pair of parallel tracks** slidably coupled to the scoring slider. At least one **suction cup** is rigidly engaged with the lower surface of the longitudinal guide member (preferably aligned therewith in plan view) and adapted to selectively adhere to the plate blank, defining a substantially flat contact surface. The tracks are arranged on opposite sides relative to the median plane of the suction cup (parallel to the longitudinal axis of the guide member). This solution achieves better distribution of mechanical stresses on the cutting system, mitigating orientation changes of the longitudinal guide member that may cause irregular scoring or damage to the plate surface. Specifically, angular momentum released on the guide member during longitudinal scoring is dissipated.

In one embodiment, the tracks are parallel to the median plane of the suction cups, further improving stress distribution. A clamping component includes a **lever** operable to switch the suction cup between a plate-clamping state and a released resting state. The lever rotates from an engaged position (clamping) to a released position (resting), exhibiting minimal vertical obstruction perpendicular to the lower surface. This allows unimpeded slider movement in both states, providing operational advantages.

The scoring slider comprises at least two **rollers,** each rotatable on one track, a scoring component, and a slider body linking the rollers and scoring component. The slider body defines an opening to accommodate the lever during sliding.

### Identified Technical Deficiencies:

### 1. Length Limitation for Single-Pass Cutting:

*"The system cannot perform single-pass cutting on plates exceeding the preset length of the longitudinal guide member. When the plate length surpasses the guide length, cutting requires **spliced cut marks** from multiple operations. This fundamentally compromises dimensional consistency of separated plate surfaces, preventing seamless plate splicing. Replacing guides with longer variants forces users to purchase multiple lengths for different plates, increasing costs and portability issues. "*

### 2. Guide Deformation Under Load:

*"Attachment of suction cups to the guide's lower surface elevates the guide away from the plate plane. During scoring, downward force on the slider handle causes **non-uniform deflection** of the guide proportional to distance from suction cups. This deflection induces* ***inconsistent scoring*/*****cutting pressure,** resulting in **line discontinuity, non-uniform cutting,** and subsequent **uneven fracture surfaces** during plate separation. "*

### 3. Roller Instability in Open-Track Design:

*"The scoring slider rollers operate in an **open rolling configuration** (whether horizontally or vertically oriented) rather than a **clamp-type track engagement.** Roller jumping during sliding causes corresponding jumps of the scoring wheel, leading to **undercutting defects** that degrade cutting quality, fracture surface integrity, and product yield. "*

### Summary of Invention

### Design Objective:

To overcome the deficiencies in the prior art by providing a **rail for a plate cutting machine composed of multi-segment short rails and suction cups,** which *simultaneously enables* **single-pass scoring/cutting** of plates with *varying specifications (lengths)* and *ensures precision quality* of scored/cut surfaces.

### Design Solutions:

To achieve the above objective, the structural design incorporates:
**1.Segment-Spliced Rail Construction** (Core Feature 1):
   *"The longitudinal guide rail is formed by* longitudinal end-to-end splicing of *multiple short rail bodies (of identical or differing lengths) with suction cups, while said short rail bodies are **laterally oppositely spliced. "***
   **Purpose:** Prior art EP 3415473 B1 uses fixed-length guides, preventing single-pass cutting of oversized plates and causing **dimensional inconsistency** in **spliced cut marks.** The present invention's **modular splice structure** allows theoretical infinite extension by combining standardized segments, ensuring **continuous scoring/cutting** and **seamless plate separation surfaces** regardless of plate length.
**2.Clamp-Type U-Groove Bearing Track** (Core Feature 2):
   ***"Smooth shafts** embedded in upper*/*lower opposing surfaces of **through grooves** on both sides of each short rail body collectively form a longitudinal **clamp-type U-groove bearing sliding track.** "*
   **Purpose:** Prior art rollers in EP 3415473 B1 exhibit **jumping due to track impurities,** causing **scoring wheel skips** and subsequent **glaze chipping** on ceramic plates. The present invention's **U-groove bearing system** provides:
   ∘ Ultra-low rolling resistance & no deviation
   ∘ **Impurity-blocking capability** (movement halts until contaminants are cleared)
   thereby eliminating undercutting defects and ensuring **intact cut edges.**
**3.Decoupled Suction Cup-Rail Interface** (Core Feature 3):
   *"The suction cup assembly is **structurally decoupled** from the rail bottom via a **clearance recess (1-3)** avoiding contact with the suction cup main body (6-5) and rubber base (6-7)."*
   **Purpose:** EP 3415473 B1's shim-supported design causes **non-uniform rail deflection** under scoring pressure, leading to **incomplete cuts** and **irregular fracture surfaces.** This invention achieves:
   ∘ **Coplanar alignment** between rail bottom and rubber base
   ∘ **Uniform clamping force** transmission to the plate resulting in **consistent scoring pressure and clean fracture planes** without chipping or misalignment.

### Technical Solution:

A rail for a plate cutting machine composed of multi-segment short rails and suction cups, comprising longitudinal guide rails and suction cups, wherein:
- Said longitudinal guide rails are formed by longitudinal end-to-end splicing of multiple short rail bodies (of identical or differing lengths) with suction cups, while said short rail bodies are **laterally oppositely spliced;**
- **Smooth shafts** are embedded in upper/lower opposing surfaces of through grooves on both sides of each short rail body, constituting longitudinal **clamp-type U-groove bearing sliding tracks.**

### Advantages over Prior Art:

**1.Modular extensibility** via segment-suction cup splicing enables **adaptive length adjustment** for single-pass cutting of arbitrarily long plates, guaranteeing **cut surface uniformity.**
**2.Clamp-type track engagement** of U-groove bearings eliminates roller jumping, resolving prior art **undercutting defects** and **glaze damage.**
**3.Decoupled rail-suction cup interface** eliminates shim-induced deflection, ensuring **uniform scoring pressure** and preventing **irregular fractures/chipped edges.**

### Brief Description of the Drawings

**Fig. 1****:** Isometric schematic diagram of the **plate cutting machine rail composed of multi-segment short rails and suction cups.**
**Fig. 2****:** Structural schematic diagram of the **short rail** in Fig. 1.
**Fig. 3****:** Exploded structural schematic diagram of the **short rail.**
**Fig. 4****:** Structural schematic diagram of the **end face of the short rail body** (1).
**Fig. 5****:** Longitudinal sectional structural schematic diagram of Fig. 4.
**Fig. 6****:** Sectional structural schematic diagram taken along plane **F-F** in Fig. 4.
**Fig. 7****:** Structural schematic diagram of the suction **cup (6),** wherein:
   **6-1:** Star-groove nut
   **6-2:** Rail connector
   **6-3:** Pin shaft
   **6-4:** Lever handle
   **6-5:** Suction cup main body
   **6-6:** Spring
   **6-7:** Rubber base
**Fig. 8****:** Schematic diagram of the **rail connector (6-2).**
**Fig. 9****:** Structural schematic diagram showing **two short rail segments spliced with one suction cup.**

### Detailed Description of Embodiments

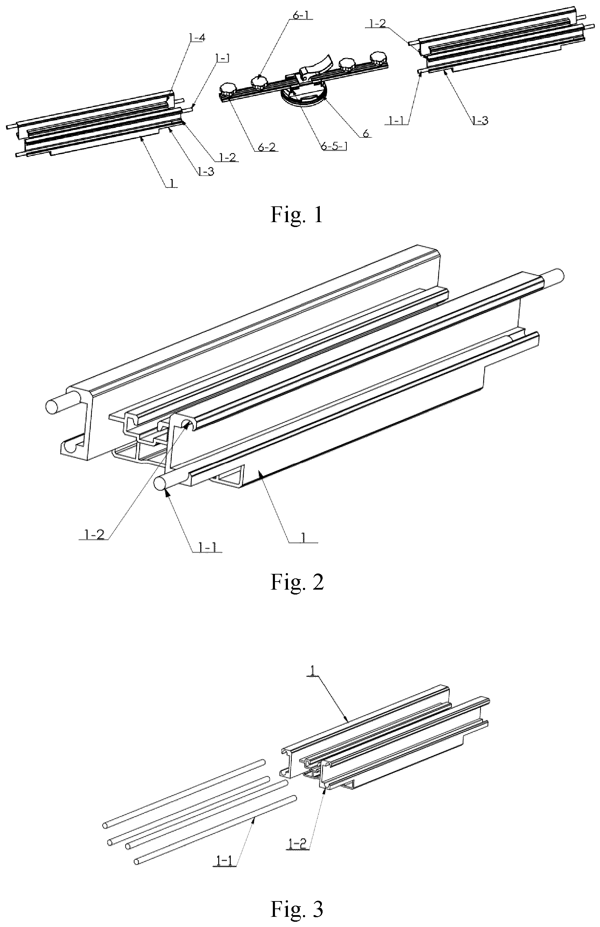

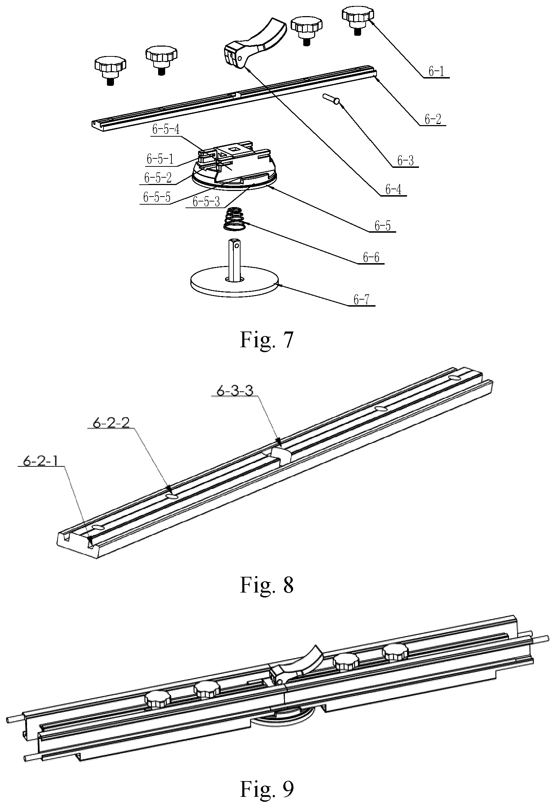

**Embodiment 1:** Referring to Figs. 1 and 9.

A rail for a plate cutting machine composed of multi-segment short rails and suction cups comprises longitudinal guide rails, suction cups (6), and a cutting device. The longitudinal guide rails are formed by longitudinal end-to-end splicing of multiple short rail bodies (1) of identical or varying lengths with suction cups (6), while said short rail bodies (1) are **laterally oppositely spliced.** Smooth shafts (1-1) are embedded in opposing upper and lower surfaces of **through grooves** on both sides of each short rail body, collectively forming longitudinal **clamp-type U-groove bearing sliding tracks.**

### Referring to Fig. 1:

A **step (1-4)** on the rail body (1) engages with an **upper clamping slot (6-5-1)** of the suction cup.

Smooth shafts (1-1) mate with **smooth shaft clamping slots (1-2).**

A **clearance recess (1-3)** avoids interference with the **suction cup main body (6-5) and rubber base (6-7).**

Tightening a **star-groove nut (6-1)** secures the rail body (1) to the **rail connector (6-2).**

### Referring to Figs. 1-6:

Short rail bodies (1) are longitudinally end-to-end spliced with suction cups (2), while lateral splicing is achieved via smooth shafts (1-1).

Both sides of each short rail body (1) feature **through grooves (1-6).** Opposing end faces of the upper roof and lower base of each groove are provided with **continuous smooth shaft clamping slots (1-2).** Smooth shafts (1-1) embedded in these slots splice multiple short rail bodies into an integrated **clamp-type U-groove bearing sliding track,** whose exposed surfaces slidably engage with U-groove bearings of the cutting device.

Through grooves on laterally abutted surfaces of short rail bodies (1) are **seamlessly offset-spliced** (Fig. 1).

End faces of the short rail body (1) exhibit an **extruded-profile structure:**
Both sides: Through grooves (1-6)
Central portion: **Shaped support** formed by an **upper longitudinally open cavity** and **a lower longitudinally through cavity**
Two walls of the upper cavity constitute **reverse top-locking slots (1-5).**

After lateral through grooves (1-6) of multiple short rail bodies (1) are abutted via smooth shafts (1-1), the suction cup (6) is clamped therebetween. The suction cup carries an **inverted T-shaped rail connector (6-2).** Vertical rods on both sides of the connector are provided with **T-slots (6-2-1),** which form a **dovetailed engagement** with through slots of the suction cup main body (6-5). The star-groove nut (6-1) is downwardly screwed to press against the base of the reverse top-locking slot (1-5), fixing the T-shaped rail connector (6-2) and reverse top-locking slot (1-5) as an integrated unit.

The clearance recess (1-3) on the short rail body (1) avoids interference with the suction cup main body (6-5) and rubber base (6-7). The step (1-4) on the rail body engages with the upper clamping slot (6-5-1) of the suction cup (6).

### Structural Features of Short Rail Body:

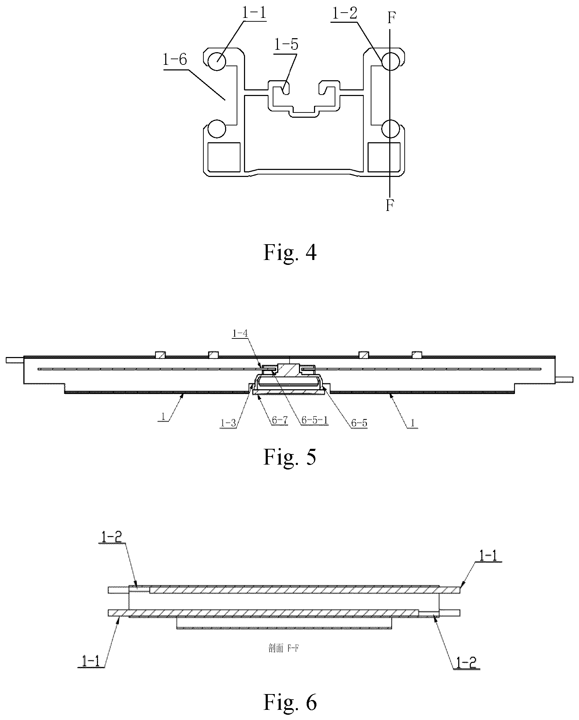

The short rail body comprises an **aluminum extruded profile (1)** and **four smooth shafts (1-1)** arranged upper/lower to form opposing clamp-type tracks (Figs. 5-7).

Smooth shafts (1-1) adopt a **staggered arrangement** (Fig. 7), facilitating both rail splicing and smooth sliding of the carriage by reducing interference.

The short rail body (1) is provided with **T-slots (1-5)** that achieve **zero-clearance engagement** with T-slots (6-2-1) of the rail connector (6-2), ensuring misalignment-free rail connections.

### Referring to Fig. 7:

The suction cup (2) comprises:
**6-1:** Star-groove nut
**6-2:** Rail connector
**6-3:** Pin shaft
**6-4:** Lever handle
**6-5:** Suction cup main body
**6-6:** Spring
**6-7:** Rubber base

### Suction Cup Main Body (6-5):

Base: Disk-shaped
Rail abutment surface: Arc-shaped, with a **groove (6-5-2)** and **clamping slot (6-5-1)** sequentially arranged bottom-to-top
Non-abutment surface: Features an **arc-shaped protrusion (6-5-3)** Planar surface (6-5-4) on the base opposite the non-abutment surface, forming a **channel (6-5-5)** between the planar surface and arc-shaped protrusion.

### Rail Connector (6-2):

T-slots (6-2-1) engage with T-slots of suction cup main body (6-5)
**Threaded hole (6-2-2)** connects to star-groove nut (6-1)
**Spring-loaded connection** via pin (6-3) and suction cup main body (6-5):
   Rubber base (6-7) → Spring (6-6) → Rail connector (via hole 6-3-3) → Fixed to suction cup main body by lever handle (6-4) and cylindrical pin (6-3)

### Clarification:

*It shall be understood that the foregoing textual description of embodiments, while detailing the design concept of the present invention, merely illustrates said concept without limiting it. Any combination, addition, or modification within the scope of this design concept shall fall within the protection domain of the present invention.*

## Claims

1. A rail for a plate cutting machine composed of multi-segment short rails and suction cups, comprising longitudinal guide rails and suction cups, **characterized in that**: said longitudinal guide rails are formed by longitudinal end-to-end splicing of multiple short rail bodies (1) of identical or varying lengths with suction cups (6), while said multiple short rail bodies (1) are laterally oppositely spliced; smooth shafts (1-1) are respectively embedded in upper and lower opposing surfaces of through grooves on both sides of each short rail body, collectively forming longitudinal sliding rails.

2. The rail for a plate cutting machine composed of multi-segment short rails and suction cups as claimed in claim 1, **characterized in that**: said short rail bodies (1) are longitudinally end-to-end spliced with suction cups (6), and said short rail bodies (1) are laterally connected via smooth shafts (1-1).

3. The rail for a plate cutting machine composed of multi-segment short rails and suction cups as claimed in claim 1, **characterized in that**: both sides of said short rail body (1) comprise through grooves (1-6); opposing end faces of the upper roof and lower base of each through groove are respectively provided with continuous smooth shaft clamping slots (1-2); smooth shafts (1-1) are embedded within said continuous smooth shaft clamping slots (1-2), whereby said smooth shafts splice multiple short rail bodies (1) into an integrated clamp-type U-groove bearing sliding rail.

4. The rail for a plate cutting machine composed of multi-segment short rails and suction cups as claimed in claim 3, **characterized in that**: through grooves on laterally abutted surfaces of said short rail bodies (1) are seamlessly and offset-spliced.

5. The rail for a plate cutting machine composed of multi-segment short rails and suction cups as claimed in claim 1, **characterized in that**: end faces of said short rail body (1) feature a profile-formed structure; both sides comprise through grooves (1-6), while the central portion comprises a shaped support formed by an upper longitudinally open cavity and a lower longitudinally through cavity; two walls of said upper longitudinally open cavity constitute reverse top-locking slots (1-5).

6. The rail for a plate cutting machine composed of multi-segment short rails and suction cups as claimed in claim 1, **characterized in that**: after lateral through grooves (1-6) of multiple short rail bodies (1) are abutted via smooth shafts (1-1), the suction cup (6) is clamped therebetween; said suction cup (6) is provided with an inverted T-shaped rail connector (6-2); vertical rods on both sides of said inverted T-shaped rail connector (6-2) are provided with T-slots (6-2-1); said T-slots (6-2-1) form a splicing fit with through slots of the suction cup main body (6-5); a star-groove nut (6-1) is downwardly screwed to press against the base of the reverse top-locking slot (1-5), thereby fixing the T-shaped rail connector (6-2) and the reverse top-locking slot (1-5) as an integrated unit.

7. The rail for a plate cutting machine composed of multi-segment short rails and suction cups as claimed in claim 4, **characterized in that**: said short rail body (1) is provided with a clearance recess (1-3) for avoiding interference with the suction cup main body (6-5) and rubber base (6-7); an upper surface of said rail body (1) is provided with a step (1-4) that engages with an upper clamping slot (6-5-1) of the suction cup (6).

8. The rail for a plate cutting machine composed of multi-segment short rails and suction cups as claimed in claim 4, **characterized in that**: said suction cup (6) comprises a star-groove nut (6-1), a rail connector (6-2), a pin shaft (6-3), a lever handle (6-4), a suction cup main body (6-5), a spring (6-6), and a rubber base (6-7); a base of the suction cup main body (6-5) is disk-shaped; an abutment surface of the suction cup main body (6-5) with the short rail body (1) is arc-shaped, with a groove (6-5-2) and a clamping slot (6-5-1) sequentially provided from bottom to top on said arc-shaped surface; a non-abutment surface of the suction cup main body (6-5) opposite the short rail body (1) is provided with an arc-shaped protrusion (6-5-3); a planar surface (6-5-4) is located on the suction cup base and opposite the non-abutment surface, wherein a channel (6-5-5) is formed between said planar surface (6-5-4) and the arc-shaped protrusion (6-5-3).
